Europäisches Patentamt

European Patent Office

Office européen des brevets

(11) Veröffentlichungsnummer: **0 411 369 A1**

## (12) EUROPÄISCHE PATENTANMELDUNG

(21) Anmeldenummer: 90113507.9

(22) Anmeldetag: 14.07.90

(51) Int. Cl.5: **B29C 31/02**, B29C 47/10, B29C 45/18

(30) Priorität: 29.07.89 DE 3925265

(43) Veröffentlichungstag der Anmeldung:
06.02.91 Patentblatt 91/06

(84) Benannte Vertragsstaaten:
AT BE CH DE ES FR GB IT LI LU NL SE

(71) Anmelder: Battenfeld GmbH
Scherl 10
D-5882 Meinerzhagen(DE)

(72) Erfinder: Schröder, Klaus, Dipl.-Ing.
Bockelsburgweg 14
D-5277 Marienheide(DE)

(74) Vertreter: Müller, Gerd et al
Patentanwälte
HEMMERICH-MÜLLER-GROSSE-POLLMEIER--
MEY-VALENTIN Hammerstrasse 2
D-5900 Siegen 1(DE)

(54) Verfahren und Vorrichtung zur Schneckenplastifizierung von duroplastischen Formmassen.

(57) Die Erfindung betrifft ein Verfahren zur Schneckenplastifizierung von mit Verstärkungsstoffen versetzten duroplastischen Formmassen mittels einer einer Produktionsmaschine zugeordneten, in einem Schneckenzylinder rotierenden und gegebenenfalls translatorisch schubartig bewegbaren Plastifizierschnecke, der die Formmasse durch eine Öffnung im Schneckenzylinder (8) zugeführt wird. Vorgeschlagen wird die Verwendung von duroplastischen Formmassen, die durch entsprechende Zugabe von fasrigen bis langfasrigen Verstärkungsstoffen nur bedingt rieselfähig, jedoch noch schüttfähig sind. Die Verwendung solcher duroplastischer Formmassen wird mit einer Dosiervorrichtung ermöglicht, die einen oberhalb der Einfüllöffnung (7) des Schneckenzylinders (8) angeordneten Einfüllschacht für die Formmasse aufweist, welcher mit mindestens einer Einrichtung (Sensor) zur Messung des Füllstandes und/oder der Druckhöhe der Formmasse ausgerüstet ist.

Fig.1

# VERFAHREN UND VORRICHTUNG ZUR SCHNECKENPLASTIFIZIERUNG VON DUROPLASTISCHEN FORM-MASSEN

Die Erfindung betrifft ein Verfahren zur Schnekkenplasifizierung von mit Verstärkungstoffen versetzen duroplastischen Formmassen mittels einer einer Produktionsmaschine zugeordneten, in einem Schneckenzylinder rotierenden und gegebenenfalls translatorisch schubartig bewegbaren Plastifizierschnecke, der die Formmasse durch eine Öffnung im Schneckenzylinder zugeführt wird. Die Erfindung betrifft auch eine Dosiervorrichtung zur Durchführung der Schneckenplastifizierung von mit Verstärkungsstoffen versetzen duroplastischen Formmassen sowie deren Anwendung.

Duroplastische Formmassen werden bekanntermaßen mit drei voneinander unterschiedlichen Verfahren bearbeitet, nämlich mit dem Pressen, dem Spritzpressen und dem Spritzgießen der Formmasse.

Duroplastische Formmassen zeichnen sich insbesondere durch ihre sehr guten Isolationseigenschaften, hohe Wärmebeständigkeit, gute elektrische Eigenschaften, hohe Chemikalienbeständigkeit und bspw. ausgezeichnete Kratzfestigkeit aus. Nachteilig bei duroplastischen Erzeugnissen ist eine gewisse Sprödigkeit der Bindemittel der sogenannten Harze. Diese Harze - bspw. auf der Basis von Phenol, Melamin, Melaminphenol, Harnstoff, Epoxid und andere mehr werden daher zur Herstellung von duroplastischen Formmassen mit Verstärkungsstoffen versehen. Je nach Faserlänge der eingesetzten Verstärkungsstoffe besteht die Möglichkeit bei kurzen Faserlängen automatengängige Granulate zu erzeugen, die einem automatischen Verarbeitungsprozeß in einer Spritzgießmaschine zugänglich sind. Bei zunehmender Faserlänge der Verstärkungsstoffe sind die duroplastischen Formmassen nicht mehr rieselfähig, sondern nur noch schüttfähig und damit nicht mehr im Spritzgießautomaten verarbeitbar. Mit duroplastischen Formmassen, die mit langfasrigen Verstärkungsstoffen versetzt sind, lassen sich hohe mechanische Eigenschaften an den hergestellten Duoplast-Teilen erzielen. Diese hohen mechanischen Eigenschaften der gefertigten Duroplast-Teile konnten allerdings bisher nur in dem unwirtschaftlichen halbautomatischen Fertigungsprozeß mit dem Spritzpressen bzw. dem Pressen erreicht werden. Ein automatisches Verarbeitungsverfahren für solche duroplastischen Formmassen z.B. in einer Spritzgießmaschine war bisher nicht möglich.

Während also für das Spritzgießen, welches ein automatisches Verarbeitungsverfahren darstellt, rieselfähige Formmassen erforderlich sind, können beim Pressen und beim Spritzpressen auch nicht rieselfähige Formmassen im halbautomatischen Betrieb verarbeitet werden. Das halbautomatische Verarbeitungsverfahren ist allerdings eine unwirtschaftliche Fertigungsmethodik, so daß in den meisten Anwendungsfällen der Wunsch besteht, auch bei nicht rieselfähigen Formmassen automatisierbare Verarbeitungstechniken anwenden zu können, insbesondere mit Spritzgießautomaten.

Die Aufgabe der Erfindung besteht darin, ein Verfahren für die automatische Produktion von Duroplast-Teilen mit hohen mechanischen Eigenschaften zu schaffen und zwar aus einer duroplastischen Formmasse, die aufgrund der fasrigen Verstärkungsstoffe nicht mehr rieselfähig ist. Ferner besteht die Aufgabe darin, eine maschinentechnische Lösung zu finden, die die automatische Produktion solcher Duroplast-Teile ermöglicht. In diesem Zusammenhang besteht eine weitere Aufgabe der Erfindung darin, während der Plastifizierung der Formmasse eine gute Homogenisierung und eine gleichmäßige Faserverteilung zu erreichen, ohne daß die Faserlängen gebrochen werden.

Die Aufgabe wird bei dem gattungsgemäßen Verfahren mit dem Patentanspruch 1 gelöst. Weitere Verfahrensausgestaltungen finden sich in den Ansprüchen 2 bis 6. Eine maschinentechnische Lösung ist in den Patentansprüchen 7 bis 14 für eine erfindungsgemäße Dosiervorrichtung angegeben. Die bevorzugte Anwendung von Verfahren und Dosiervorrichtung enthalten die Patentansprüche 15 und 16.

Das Verfahren der eingangs genannten Gattung zeichnet sich nach Patentanspruch 1 durch die Verwendung von durch Zugabe von fasrigen bis langfasrigen Verstärkungsstoffen nur bedingt rieselfähigen, insbesondere schüttbaren duroplastischen Formmassen aus. Auf diese Weise können wie bei den bereits erwähnten automatischen Verfahren der Schneckenplastifizierung von rieselfähigen Formmassen für das Spritzgießen auch die durch die Zugabe von fasrigen bis langfasrigen Verstäkungstoffen nur noch schüttfähig gewordenen duroplastischen Formmassen für ein automatisches Spritzgießen eingesetzt werden, wobei als besonderer Vorteil die gute Homogenisierung und die gleichmäßige Faserverteilung durch die Schneckenplastifizierung hervorzuheben ist. Mit dem erfindungsgemäßen Verfahren sind daher erstmalig Duroplast-Teile mit automatisch arbeitenden Spritzgießmaschinen herstellbar, welche durch die Vernetzung mit langfasrigen Verstärkungsstoffen eine sehr hohe mechanische Festigkeit und eine ausgezeichnet Kratzfestigkeit aufweisen. Das erfindungsgemäße Verfahren eignet sich auch für die Vorplastifizierung solcher Formmassen, die dann anschließend automatisch in Pressen oder in Spritzpreßmaschinen verarbeitet werden. Bei der Vorplastifizierung erfolgt nach der Dosierung der Formmasse über eine Schubbewegung der Schnecke das Schneiden einer plastischen Tablette mittels eines Messer, wobei die Tablette zum weiteren Transport in das geöffnete Preßwerkzeug bzw. zum Spritzzylinder bei Spritzpreßwerkzeugen transportiert wird.

In Ausgestaltung der Erfindung wird vorgeschlagen, daß die bedingt rieselfähigen, schüttbaren Formmassen der Einfüllöffnung des Schneckenzylinders aus einem Füllschacht mit gerelgeltem Staudruck zugeführt wird. Die der Plastifizierschnecke aufzugebenden duroplastischen Formmassen sind wegen der Zugabe der langfasrigen Verstärkungsstoffe nicht nur nicht rieselfähig sondern auch voluminös und führen deshalb im allgemeinen im Einfüllschacht des Schneckenzylinders zu Brückenbildungen, so daß die Zuführung der Formmassen in die Plastifizierschnecke teilweise unterbrochen wird. Mit der vorliegenden Maßnahme wird die Brückenbildung im Einfüllschacht verhindert und somit die kontinuierliche Aufnahme der Formmasse bei der Rotationsbewegung der Plastifizierschnecke ermöglicht. Von besonderem Vorteil ist dabei, wenn die Druckhöhe und/oder der Füllstand der Formmasse an einem oberen bzw. unteren Meßpunkt im Einfüllschacht abgegriffen wird, so daß immer ein ausreichend hoher Staudruck besteht, der unter Vermeidung von Brückenbildung die nicht rieselfähigen und voluminösen Formmassen in den Einzugsbereich der Plastifizierschnecke drückt. Diese Vorteile werden auch dadurch erreicht, daß zweckmäßigerweise die Druckhöhe der Formmasse im unteren Bereich des Füllschachtes durch mindestens einen Sensor abgegriffen wird.

Eine besonders vorteilhafte Ausgestaltung der Erfindung zeigt sich darin, wenn die bedingt rieselfähige, schüttbare Formmasse dem Füllschacht aus einem Behältnis mit größerer Bevorratung mittels einer dosierenden Fördereinrichtung volumetrisch geregelt und in Abhängigkeit von der Füllhöhe der Formmasse im Füllschacht zugeführt wird. Auf diese Weise wird das große Vorratsvolumen portioniert und in kleine Volumensströme aufgeteilt, die ihrerseits im Einfüllschacht den optimalen Massedruck für eine kontinuierliche Zuführung der duroplastischen Formmasse zur Plastifizierschnecke sicherstellen. Infolge dieser Maßnahmen können auch langfasrige Verstärkungsstoffe wie Glasfasern, Kohlefasern, Keramikfasern oder dergleichen in die duroplastischen Formmassen eingearbeitet werden, die als besonders spröde gelten und leicht zerbrechlich sind.

Die maschinentechnische Ausgestaltung der Erfindung bezieht sich auf eine Dosiervorrichtung zur Durchführung der Schneckenplastifizierung von mit Verstärkungsstoffen versetzten duroplastischen Formmassen, bei der zweckmäßigerweise oberhalb der Einfüllöffnung des Schneckenzylinders ein Einfüllschacht für die Formmasse angeordnet ist mit mindestens einer Einrichtung (Sensor) zur Messung des Füllstandes und/oder der Druckhöhe der Formmasse. Insbesondere bei einem zylinderförmigen Füllschacht ist der Massedruck, der auf der Einfüllöffnung des Schneckenzylinders ansteht, besonders gut mit einem Sensor zu messen.

Zur Ausgestaltung der Dosiervorrichtung ist vorgesehen, daß zwischen dem Füllschacht und einem Bevorratungsbehältnis für die Formmasse eine dosierende Fördereinrichtung, vorzugsweise eine Dosierschnecke oder eine Schwingförderrinne angeordnet ist, welche den Auslauf des Bevorratungsbehältnisses und den Einlauf des Einfüllschachtes verbindet. Mit Hilfe der Schwingförderrinne ist das dem Einfüllschacht aufzugebende Fördervolumen der Formmasse besonders gut zu dosieren. Zweckmäßig ist dabei, wenn die Sensor-Einrichtung im Einfüllschacht mit der Steuereinheit der Produktionsmaschine derart verbunden ist, daß je nach Füllstand der Formmasse im Einfüllschacht die dosierende Fördereinrichtung einschaltbar bzw. abschaltbar ist.

Damit im Bevorratungsbehältnis die Brückenbildung der bedingt rieselfähigen Formmassen weitgehend unterbunden wird, wird mit der Erfindung vorgeschlagen, daß das Behältnis einen asymmetrisch verlagerten, konisch zulaufenden Auslauftrichter aufweist. Da die Brückenbildung der schüttbaren Formmassen im Behältnis und im Einfüllschacht grundsätzlich die Gefahr einer Betriebsunterbrechung in sich bergen, wird zu weiteren Vermeidung der Brückenbildung vorgeschlagen, daß an dem Bevorratungsbehältnis und/oder dem Einfüllschacht Vibrationseinrichtungen, vorzugsweise in deren Auslaufbereich angeordnet sind. Unter dem Begriff Vibrationseinrichtung soll in diesem Zusammenhang auch verstanden werden, daß die Wandungen des Behältnisses bzw. des Einfüllschachtes in diesen Bereichen flexibel bzw. elastisch ausgebildet sind.

Um die erfindungsgemäße Dosiervorrichtung konstruktiv kompakt zu gestalten, weist nach einer anderen Ausgestaltung der Erfindung der Einfüllschacht einen mit dem Schneckenzylinder verbindbaren und/oder den Schneckenzylinder umfassenden Spannring auf. Ferner ist es zweckmäßig, das Bevorra tungsbehältnis und die Schwingförderrinne in einer gemeinsa-men mit der Produktionsmaschine verbindbaren Halterung anzuordnen.

Eine besonders vorteilhafte Maßnahme sieht vor, daß an der Dosiervorrichtung die Einfüllöffnung des Schneckenzylinders aus der Achsmitte in Drehrichtung der Plastifizierschnecke versetzt angeordnet ist. Daher können selbst langfasrige und leicht zerbrechliche Verstärkungsstoffe wie bspw. Glasfasern etc. aus dem Einfüllschacht durch die Einfüllöffnung im Schneckenzylinder geführt werden, ohne daß diese Verstärkungsstoffe zerbrochen werden. Denn die Erhaltung der langfasrigen Verstärkungsstoffe ist unter anderem eine wesentliche Voraussetzung für die hohe mechanische Festigkeit der gefertigten Duroplast-Teile.

Die Erfindung zeichnet sich in besonderem Maße aus durch die Anwendung des Plastifizierverfahrens und der zugehörigen Dosiervorrichtung für das automatische Spritzgießen der nicht rieselfähigen faserverstärkten Duroplastmassen mit Spritzgießmaschinen und mit dem Ausspritzen der Formmasse durch eine Düse. Ebenso vorteilhaft gestaltet sich die Anwendung der Erfindung für das automatische Pressen von nicht rieselfähigen, faserverstärkten Duroplastmassen mit Preßmaschinen und mit einer Einrichtung für die Schnecken-Vorplastifizierung der Formmasse und dem anschließenden Schneiden von Formtabletten, die anschließend der Preßmaschine zugeführt werden.

Die Erfindung wird nachfolgend anhand eines Ausführungsbeispiels näher erläutert. Es zeigen:

Figur 1 die Dosiervorrichtung für nicht rieselfähige, aber schüttbare duroplastische Formmassen in einer Ansicht,

Figur 2 die Dosiervorrichtung in einer Seitenansicht,

Figur 3 u. Figur 4 den Füllschacht der Dosiervorrichtung teilweise im Schnitt,

Figur 5 u. Figur 6 den Schneckenzylinder der Plastifizierschnecke in Schnittdarstellung und in einer Draufsicht und

Figur 7 die Plastifizierschnecke.

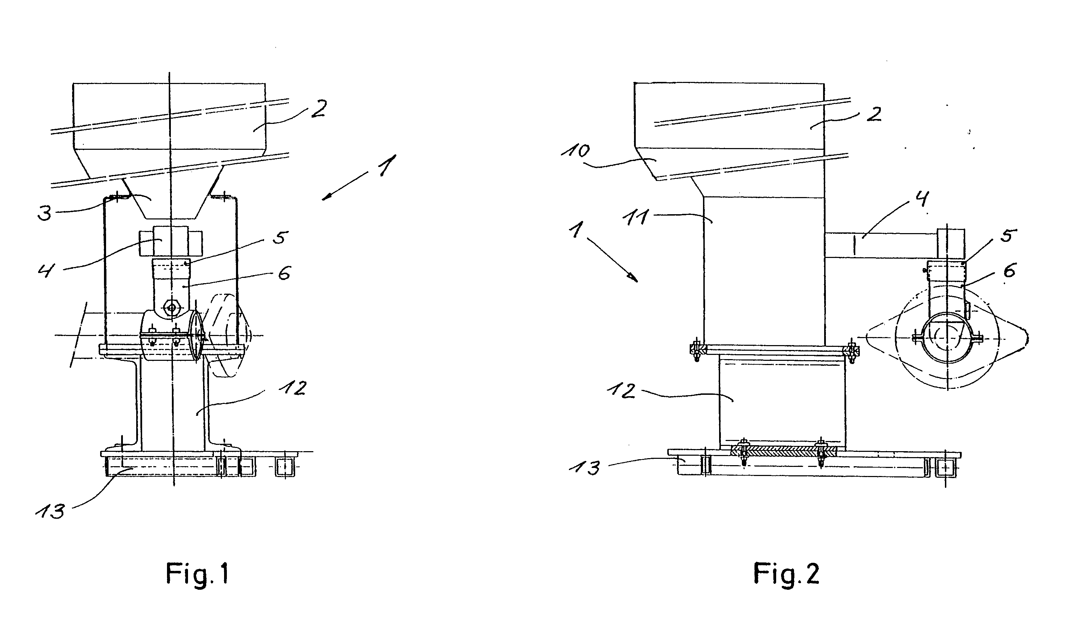

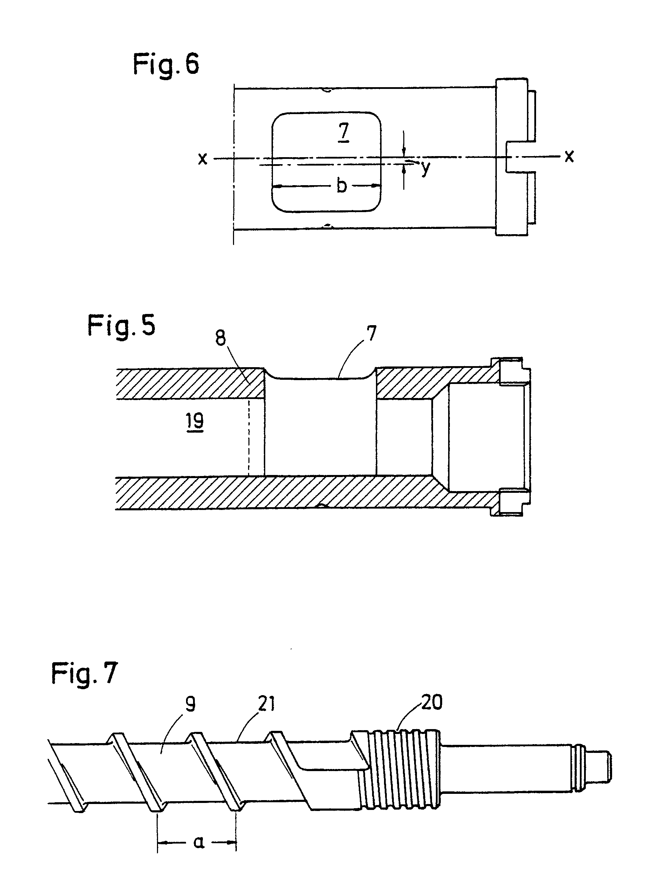

Fig. 1 und 2 zeigen Ansichten der Dosiervorrichtung 1 mit dem Bevorratungsbehältnis 2 für die duroplastischen Formmassen, die wegen der Zugabe von insbesondere langfasrigen Verstärkungsstoffen nur bedingt rieselfähig, bisweilen nicht mehr rieselfähig, insbesondere aber schüttfähig sind. Der Auslauf 3 des Bevorratungsbehältnisses mündet oberhalb einer Schwingförderrinne 4 aus. Die Schwingförderrinne 4 ist horizontal angeordnet und verbindet den Einlauf 5 eines Einfüllschachtes 6, der oberhalb der Einfüllöffnung 7 des Schnekkenzylinders 8 für die Plastifizierschnecke 9 angeordnet ist. Der Schneckenzylinder ist teilweise in den Fig. 1 und 2 in einer strichpunktierten Linienführung schematisch dargestellt. Die Einzelheiten von Einfüllöffnung, Schneckenzylinder und Plastifizierschnecke sind in den Fig. 5, 6 und 7 dargestellt sind.

Aus Fig. 2 ist gut zu ersehen, daß das Bevorratungsbehältnis 2 einen asymmetrisch verlagerten, konisch zulaufenden Auslauftrichter 10 aufweist, damit Brückbildungen der schüttfähigen Formmasse in dem Auslauftrichter vermieden werden. Die schräg verlaufende Achse des Auslauftrichters ist auf die Gutaufgabe der Schwingförderrinne 4 gerichtet. Fig. 1 und Fig. 2 zeigen ferner, daß das Bevorratungsbehältnis 2 und die Schwingförderrinne 4 in einer gemeinsamen mit der Produktionsmaschine bspw. der Spritzgießmaschine verbindbaren Halterung 11 angeordnet sind. Diese Halterung ist gehäuseähnlich ausgebildet und ist an einer Stützkonsole 12 angeflanscht, die mit dem Maschinenrahmen der Spritzgießmaschine verschraubt ist. Die Spritzgießmaschine selbst ist nicht näher dargestellt, soll aber üblichen und bekannten Konstruktionen entsprechen.

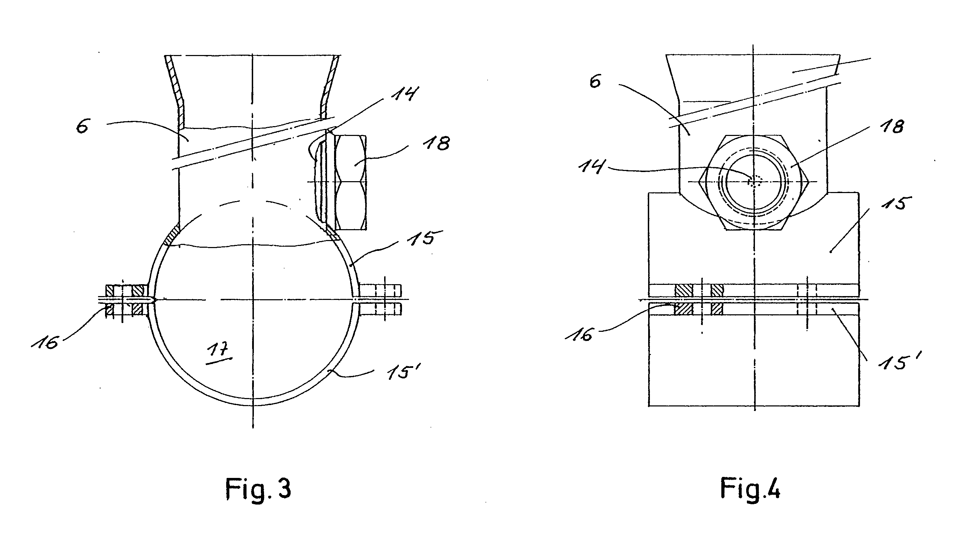

Fig. 3 und Fig. 4 zeigen Einzelheiten des Einfüllschachtes 6. Der Einfüllschacht hat im unteren Bereich eine Sensor-Einrichtung 14, mit der der Staudruck d.h. die Füllstandshöhe der bedingt bis nicht rieselfähigen duroplastischen Formmassen im Einfüllschacht meßbar ist. Der Einfüllschacht sitzt auf einer Halbschale 15, die mit Hilfe einer Flanschverbindung 16 mit einer zweiten Halbschale 15' zu einem rohrförmigen Spannring 17 verbindbar ist. Der Spannring 17 umfaßt den Schneckenzylinder an dem Ort, wo die Einfüllöffnung 7 am Schneckenzylinder 8 angeordnet ist. Die Sensor-Einrichtung 14 befindet sich in einer zu einer Schraube ausgebildeten Einheit. Vorgesehen ist auch, daß die Füllstandshöhe der Formmasse im Einfüllschacht an einem oberen und an einem unteren Meßpunkt abgegriffen wird.

In Fig. 5 ist der Schnitt durch den Schneckenzylinder 8 gezeigt, die Einfüllöffnung ist mit der Ziffer 7 bezeichnet, in der Bohrung 19 rotiert die Plastifizierschnecke 9. In Fig. 6 ist anhand der Draufsicht auf den Schneckenzylinder deutlich zu sehen, daß dessen Einfüllöffnung 7 aus der Achsmitte x-x um ein Maß y in Drehrichtung der Plastifizierschnecke versetzt angeordnet ist. Die Plastifizierschnecke 9 ist in Fig. 7 dargestellt. In Förderrichtung gesehen hat die Plastifizierschnecke vor der Einlauföffnung 7 des Schneckenzylinders 8 mehrere Schneckennuten 20 mit geringer Tiefe und kleiner Steigung, die im Übergangsbereich zur Einlauföffnung 7 in einen Schneckengang 21 mit großer Steigung und mit großer Steghöhe übergeht. Die axiale Erstreckung der Einfüllöffnung 7 ist größer als die Steigung eines Schneckenganges. Die Schneckennuten, die im übrigen in der gleichen Richtung gewendelt sind wie der nachfolgende Schneckengang, verhindern ein Rückströmen der Formmasse aus dem Schneckenzylinder. Die große Steigung der Schneckengänge gewährleistet unter anderem die gute Homogenisierung und gleichmäßige Faserverteilung in der Formmasse während des Plastifizierens. Die einen Schneckengang übergreifende große Einfüllöffnung im Schneckenzylinder gewährleistet ein hohes kontinuierliches Einzugsvolumen für die Formmasse.

Zu bemerken ist noch, daß an dem Bevorratungsbehältnis 2 und/oder an dem Einfüllschacht 6 vorzugsweise in deren Auslaufbereich, Vibrationseinrichtungen angeordnet sein können, die zur Aufgabe haben, Brückenbildungen der nicht rieselfähigen Formmasse im Auslaufbereich von Behältnis 2 und Einfüllschacht 6 zu verhindern. Diese Vibrationseinrichtungen sind nicht näher dargestellt, können aber im einfachsten Fall dadurch hergestellt sein, daß die entsprechenden Wandbereiche von Bevorratungsbehältnis bzw. Einlaufschacht flexibel ausgebildet sind.

Gemäß der zugrundeliegenden Aufgabe sollen aus duroplastischen Formmassen mechanisch hoch belastbare Kunststoff-Fertigprodukte in einem kontinuierlichen und automatisch ablaufenden Herstellungsprozeß bspw. durch Spritzgießen hergestellt werden. Hierzu werden erfindungsgemäß der duroplastischen Formmasse fasrige bis langfasrige Verstärkungsstoffe in den entsprechenden Mengen zugegeben, wodurch die duroplastischen Formmassen nur noch bedingt gegebenenfalls nicht mehr rieselfähig sind, sondern lediglich schüttfähig. Dennoch gelingt es mit dem erfindungsgemäßen Verfahren und der zuvor beschriebenen Dosiervorrichtung diese an sich schwer zu behandelnden Formmassen so zu plastifizieren, daß die Verstärkungsstoffe gleichmäßig in der Masse verteilt sind, nicht gebrochen werden und gleichwohl eine Verarbeitung in kontinuierlich arbeitenden Spritzgießautomaten möglich ist.

Hierzu wird die bedingt rieselfähige, jedoch schüttfähige Formmasse zunächst in das Bevorratungsbehältnis 2 gefüllt; aus dem zur Vermeidung von Brückenbildung asymmetrisch gestalteten Auslauf 3 dieses Behältnisses wird die Formmasse auf die Schwingförderrinne 4 gegeben. Von dieser wird die Formmasse dem Einlauf 5 des Einlaufschachtes 6 zugeführt. Die zugeführte Menge ist derart dosiert, daß in dem Einlaufschacht 6 Formmasse zurückgestaut wird, so daß die Stauhöhe im unteren Bereich einen bestimmten Vordruck erzeugt, der in gleicher Höhe an der Einfüllöffnung 7 des Schneckenzylinders ansteht. Die Füllhöhe der Formmasse wird an einem oberen bzw. unteren Meßpunkt im Füllschacht abgegriffen bzw. im unteren Bereich des Füllschachtes durch mindestens einen Sensor - dargestellt ist die Sensor-Einrichtung 14 gemessen. In Abhängigkeit von der Druckhöhe und der Füllhöhe der Formmasse im Füllschacht wird von der Sensor-Einrichtung 14 ein Signal zum Einschalten oder Abschalten der Schwingförderrin ne abgegeben. Hierzu ist die Sensor-Einheit 14 in entsprechender Weise in die Regeltechnik/Steuerung der Spritzgießmaschine integriert. Damit die langfasrigen Verstärkungsstoffe beim Transport aus dem Füllschacht 6 in die Plastifizierschnecke 9 weitgehend ungebrochenbleiben, wird die Formmasse etwas tangential zur Schneckendrehrichtung durch die Einfüllöffnung des Schneckenzylinders eingezogen. Damit die langen Fasern der Verstärkungsstoffe während der Plastifizierung in der Schnecke nicht gebrochen werden gleichwohl aber eine ausgezeichnete Homogenisierung der Formmasse und eine gute Faserverteilung in dieser Formmasse erzielt wird, ist die Plastifizierschnecke mit Schneckengängen großer Steigung zumindest im Bereich der Einfüllöffnung 7 ausgerüstet. Dies alles ermöglicht die Anwendung von mit langfasrigen Verstärkungsstoffen versetzten duroplastischen Formmassen für das automatische Spritzgießen, nämlich dem Ausspritzen der Formmassen durch eine Düse sowie die Anwendung dieser Formmassen für das automatische Pressen von faserverstärkten Duroplasten mit Preßmaschinen und mit einer Einrichtung für die Schnecken-Vorplastifizierung der Formmasse und anschließendem Schneiden von Formtabletten.

Die oben beschriebene Dosiervorrichtung, die spezielle Gestaltung des Bevorratungsbehältnisses, der Einfüllschacht mit integriertem Sensor, der Schneckenzylinder mit besonderer Konstruktion sowie die Plastifizierschnecke in Sonderkonstruktion können im Umfang der Patentansprüche auch eine andere Ausgestaltung haben und erfüllen gleichwohl das gesetzte Ziel der automatengängigen Verarbeitung der in Rede stehenden duroplastischen Formmassen.

## Ansprüche

1. Verfahren zur Schneckenplastifizierung von mit Verstärkungsstoffen versetzten duroplastischen Formmassen mittels einer einer Produktionsmaschine zugeordneten, in einem Schneckenzylinder rotierenden und gegebenenfalls translatorisch schubartig bewegbaren Plastifizierschnecke, der die Formmasse durch eine Öffnung im Schneckenzylinder zugefüht wird,
**gekennzeichnet durch**
die Verwendung von durch Zugabe von fasrigen bis langfasrigen Verstärkungsstoffen nur bedingt rieselfähigen, insbesondere schüttbaren duroplastischen Formmassen.

2. Verfahren nach Anspruch 1,
**dadurch gekennzeichnet,**
daß die bedingt rieselfähigen, schüttbaren Formmassen der Einfüllöffnung des Schneckenzylinders aus einem Füllschacht mit geregeltem Staudruck zugeführt werden.

3. Verfahren nach Anspruch 1 oder 2,
**dadurch gekennzeichnet,**
daß die Druckhöhe und/oder der Füllstand der Formmasse an einem oberen bzw. unteren Meßpunkt im Füllschacht abgegriffen wird.

4. Verfahren nach Anspruch 1 oder 2,

**dadurch gekennzeichnet,**

daß die Druckhöhe der Formmasse im unteren Bereich des Füllschachtes durch mindestens einen Sensor abgegriffen wird.

5. Verfahren nach mindestens einem der Ansprüche 1 bis 4,

**dadurch gekennzeichnet,**

daß die bedingt rieselfähige, schüttbare Formmasse dem Füllschacht aus einem Behältnis mit größerer Bevorratung mittels einer dosierenden Fördereinrichtung volumetrisch geregelt und in Abhängigkeit von der Füllhöhe der Formmasse im Füllschacht zugeführt wird.

6. Verfahren nach mindestens einem der Ansprüche 1 bis 5,

**dadurch gekennzeichnet,**

daß die langfasrigen Verstärkungsstoffe Glasfasern, Kohlefasern, Keramikfasern oder dergleichen sind.

7. Dosiervorrichtung zur Durchführung der Schneckenplastifizierung von mit Verstärkungsstoffen versetzten duroplastischen Formmassen nach den Ansprüchen 1 bis 6,

**gekennzeichnet durch**

einen oberhalb der Einfüllöffnung (7) des Schneckenzylinders (8) angeordneten Einfüllschacht (6) für die Formmasse mit mindestens einer Einrichtung (14) - Sensor -zur Messung des Füllstandes und/oder der Druckhöhe der Formmasse.

8. Dosiervorrichtung nach Anspruch 7,

**dadurch gekennzeichnet,**

daß zwischen dem Einfüllschacht (6) und einem Bevorratungsbehältnis (2) für die Formmasse eine dosierende Fördereinrichtung, vorzugsweise eine Dosierschnecke oder eine Schwingsförderrinne (4) angeordnet ist, welche den Auslauf (3) des Bevorratungsbehältnisses (2) und den Einlauf (5) des Einfüllschachtes (6) verbindet.

9. Dosiervorrichtung nach Anspruch 7 oder 8,

**dadurch gekennzeichnet,**

daß die Sensor-Einrichtung (14) im Einfüllschacht (6) mit der Steuereinheit der Produktionsmaschine derart verbunden ist, daß je nach Füllstand der Formmasse im Einfüllschacht (6) die dosierende Fördereinrichtung (4) einschaltbar bzw. abschaltbar ist.

10. Dosiervorrichtung nach Anspruch 7, 8 oder 9,

**dadurch gekennzeichnet,**

daß das Bevorratungsbehältnis (2) einen asymmetrisch verlagerten, konisch zulaufenden Auslauftrichter (3) aufweist.

11. Dosiervorrichtung nach mindestens einem der Ansprüche 7 bis 10,

**dadurch gekennzeichnet,**

daß an dem Bevorratungsbehältnis (2) und/oder dem Einfüllschacht (6) Vibrationseinrichtungen, vorzugsweise in deren Auslaufbereich, angeordnet sind.

12. Dosiervorrichtung nach mindestens einem der Ansprüche 7 bis 11,

**dadurch gekennzeichnet,**

daß der Einfüllschacht (6) einen mit dem Schneckenzylinder (8) verbindbaren und/oder den Schneckenzylinder umfassenden Spannring (15, 15') aufweist.

13. Dosiervorrichtung nach mindestens einem der Ansprüche 7 bis 12,

**dadurch gekennzeichnet,**

daß das Bevorratungsbehältnis (2) und die Schwingförderrinne (4) in einer gemeinsamen mit der Produktionsmaschine verbindbaren Halterung (11) angeordnet sind.

14. Dosiervorrichtung nach mindestens einem der vorhergehenden Ansprüche 7 bis 13,

**dadurch gekennzeichnet,**

daß die Einfüllöffnung (7) des Schneckenzylinders (8) aus der Achsmitte (x-x) in Drehrichtung der Plastifizierschnecke (9) versetzt (Abstand y) angeordnet ist.

15. Dosiervorrichtung nach mindestens einem der vorhergehenden Ansprüche 7 bis 14,

**gekennzeichnet durch**

deren Anwendung für das automatische Spritzgießen von faserverstärkten Duroplasten mit Spritzgießmaschinen und dem Ausspritzen der Formmasse durch eine Düse.

16. Dosiereinrichtung nach mindestens einem der vorhergehenden Ansprüche 7 bis 14,

**gekennzeichnet durch**

deren Anwendung für das automatische Pressen von faserverstärkten Duroplasten mit Preßmaschinen und mit einer Einrichtung für die Schnecken-Vorplastifizierung der Formmasse und anschließendem Schneiden von Formtabletten.

Fig.1

Fig.2

EP 0 411 369 A1

6

14

18

15

16

17

15'

**Fig. 3**

6

18

14

15

16

15'

**Fig.4**

Fig. 6

Fig. 5

Fig. 7

9

**Europäisches Patentamt**

# EUROPÄISCHER RECHERCHENBERICHT

Nummer der Anmeldung

**EP 90 11 3507**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 746 489   (RIZZI et al.)<br>* Spalte 1, Zeile 1 - Spalte 2, Zeile 17; Spalte 6, Zeilen 8-29; Figur 1 *<br>— — — | 1,6,15 | B 29 C 31/02<br>B 29 C 47/10<br>B 29 C 45/18 |
| A | | 8 | |
| A | US-A-2 568 332   (GENOVESE)<br>* Spalte 1, Zeile 1 - Spalte 4, Zeile 30; Figur 1 *<br>— — — | 1,2,3,4,5 | |
| X | | 7,8,9,10, 11 | |
| A | US-A-3 225 963   (ARPAJIAN)<br>* Spalte 1, Zeile 1 - Spalte 4, Zeile 16; Figur 1 *<br><br>— — — | 1,2,4,5,7, 8,9,10,11, 13,18 | |
| A | GB-A-1 366 171   (FOSTER et al.)<br>* Seite 1, Zeilen 56-76; Figuren 1-3 *<br>— — — | 12 | |
| A | GB-A-1 529 944   (IMPERIAL CHEMICAL IND. LTD)<br>* Seite 2, Zeilen 15-23; Figuren 1-3 *<br>— — — | 14 | |
| A | US-A-4 349 323   (FURBISH et al.)<br>— — — — — | | |

| RECHERCHIERTE SACHGEBIETE (Int. Cl.5) |
|---|
| B 29 C |

Der vorliegende Recherchenbericht wurde für alle Patentansprüche erstellt

| Recherchenort | Abschlußdatum der Recherche | Prüfer |
|---|---|---|
| Den Haag | 08 November 90 | SOEDERBERG J.-E. |